# EUROPEAN PATENT APPLICATION

(11) **EP 4 780 000 A1**
(43) Date of publication of application: **22.07.2026**
(21) Application number: 23952336.8
(22) Date of filing: 12.09.2023
(51) Int. Cl.: H04N 21/443, H04N 5/63, H02M 1/00

(54) **IMAGE DISPLAY DEVICE**

(71) Applicant: LG Electronics Inc., Yeongdeungpo-gu Seoul 07336 (KR)
(72) Inventor: BAEK, Dongchul, Seoul 06772 (KR)
(74) Representative: Vossius & Partner Patentanwälte Rechtsanwälte mbB
(86) International application number: PCT/KR2023/013631
(87) International publication number: WO 2025/058096

(57) **Abstract**

The image display apparatus of the present disclosure includes: a display; a signal processing device; a relay to switch an input AC voltage; a converter connected in parallel to a first end of the relay; a controller to operate based on DC voltage from the converter; and a switch disposed between the converter and the signal processing device, and to operate based on a control signal output, wherein in first standby mode, a voltage of a first level is supplied to the controller based on off states of the relay and the switch, and operation of the converter, and in second standby mode, a voltage of a second level greater than the first level is supplied to the signal processing device based on off state of the relay, and operations of the switch and the converter. Accordingly, it is possible to reduce power consumption in the standby mode.

## Description

### BACKGROUND

### 1. Technical Field

The present disclosure relates to an image display apparatus, and more particularly to an image display apparatus capable of reducing power consumption in a standby mode.

### 2. Description of the Related Art

An image display apparatus is an apparatus that displays images.

Recently, in keeping with the increase in image resolution and the increase in image sharpness, the display resolution or peak luminance of a display in an image display apparatus is increasing.

As the display resolution or peak luminance of a display becomes higher, the consumption of power supplied to the display increases.

Various studies have been conducted to reduce power consumption of an image display apparatus in a standby mode.

### SUMMARY

It is an objective of the present disclosure to provide an image display apparatus capable of reducing power consumption in a standby mode.

It is another objective of the present disclosure to provide an image display apparatus capable of implementing a plurality of standby modes and reducing power consumption in each standby mode.

In order to achieve the above and other objectives, an image display apparatus according to an embodiment of the present disclosure includes: a display; a signal processing device configured to output an image signal to the display; a relay configured to switch an input AC voltage; a converter connected in parallel to a first end of the relay; a controller configured to operate based on a DC voltage from the converter; and a switch disposed between the converter and the signal processing device, and configured to operate based on a control signal output from the controller, wherein in a first standby mode, a voltage of a first level is supplied to the controller based on an off state of the relay, an off state of the switch, and operation of the converter, and in a second standby mode, a voltage of a second level greater than the first level is supplied to the signal processing device based on an off state of the relay, operation of the switch, and operation of the converter.

Meanwhile, the converter can be configured to output the voltage of the first level in the first standby mode and output the voltage of the second level, greater than the first level, in the second standby mode.

Meanwhile, power consumption in the first standby mode can be less than power consumption in the second standby mode.

Meanwhile, in the first standby mode, the voltage of the second level is not supplied to the signal processing device.

Meanwhile, the image display apparatus can further include: a second converter connected to a second end of the relay and configured to convert the input AC voltage from the relay into a DC voltage; and a third converter configured to convert a level of the DC voltage from the second converter.

Meanwhile, in an operating mode after the first standby mode or the second standby mode, the third converter can be configured to supply a voltage of a third level, greater than the second level, to the signal processing device based on an on state of the relay, operation of the second converter, and operation of the third converter.

Meanwhile, in response to the first standby mode being switched to the second standby mode, the switch can be turned on, and the voltage of the second level greater than the first level can be supplied to the signal processing device.

Meanwhile, in response to the second standby mode being switched to the first standby mode, the switch can be turned off, and the voltage of the first level can be supplied to the signal processing device.

Meanwhile, the image display apparatus can further include a voltage dropper configured to drop a level of a DC voltage from the converter and output the voltage of the first level, wherein in the first standby mode, the image display apparatus can be configured to supply the voltage of the first level to the controller based on an off state of the relay, an off state of the switch, operation of the converter, and operation of the voltage dropper, and in the second standby mode, the voltage of the second level greater than the first level is supplied to the signal processing device based on an off state of the relay, operation of the switch, and operation of the converter.

Meanwhile, the converter can be configured to output a voltage of a fourth level greater than the first level in the first standby mode, and output the voltage of the second level greater than the fourth level in the second standby mode.

Meanwhile, the converter can be configured to output a voltage of a fourth level greater than the first level in the first standby mode, and the voltage dropper can be configured to drop the voltage of the fourth level to the first level in the first standby mode.

Meanwhile, the voltage dropper can be configured to drop the voltage of the second level to the first level in the second standby mode.

Meanwhile, the converter can include a flyback converter.

An image display apparatus according to another embodiment of the present disclosure includes: a display; a signal processing device configured to output an image signal to the display; a relay configured to switch an input AC voltage; a converter connected in parallel to a first end of the relay; a voltage dropper configured to drop a level of a DC voltage from the converter; a controller configured to operate based on a DC voltage from the converter; and a switch disposed between the converter and the signal processing device, and configured to operate based on a control signal output from the controller, wherein in a first standby mode, a voltage of a first level is supplied to the controller based on an off state of the relay, an off state of the switch, operation of the converter, and operation of the voltage dropper, and in a second standby mode, a voltage of a second level greater than the first level is supplied to the signal processing device based on an off state of the relay, operation of the switch, and operation of the converter.

Meanwhile, the image display apparatus can further include: a second converter connected to a second end of the relay and configured to convert the input AC voltage from the relay into a DC voltage; and a third converter configured to convert a level of the DC voltage from the second converter.

Meanwhile, in an operating mode after the first standby mode or the second standby mode, the third converter can be configured to supply a voltage of a third level, greater than the second level, to the signal processing device based on an on state of the relay, operation of the second converter, and operation of the third converter.

### EFFECTS OF THE DISCLOSURE

An image display apparatus according to an embodiment of the present disclosure includes: a display; a signal processing device configured to output an image signal to the display; a relay configured to switch an input AC voltage; a converter connected in parallel to a first end of the relay; a controller configured to operate based on a DC voltage from the converter; and a switch disposed between the converter and the signal processing device, and configured to operate based on a control signal output from the controller, wherein in a first standby mode, a voltage of a first level is supplied to the controller based on an off state of the relay, an off state of the switch, and operation of the converter, and in a second standby mode, a voltage of a second level greater than the first level is supplied to the signal processing device based on an off state of the relay, operation of the switch, and operation of the converter. Accordingly, it is possible to reduce power consumption in the standby mode. Particularly, in a plurality of standby modes, power consumption in each standby mode can be reduced.

Meanwhile, the converter can be configured to output the voltage of the first level in the first standby mode and output the voltage of the second level, greater than the first level, in the second standby mode. Accordingly, power consumption in the first standby mode and the second standby mode can be reduced.

Meanwhile, power consumption in the first standby mode can be less than power consumption in the second standby mode. Accordingly, it is possible to reduce power consumption in the standby mode.

Meanwhile, in the first standby mode, the voltage of the second level is not supplied to the signal processing device. Accordingly, power consumption in the first standby mode can be reduced.

Meanwhile, the image display apparatus can further include: a second converter connected to a second end of the relay and configured to convert the input AC voltage from the relay into a DC voltage; and a third converter configured to convert a level of the DC voltage from the second converter. Accordingly, an operating voltage can be stably supplied to the signal processing device through the third converter.

Meanwhile, in an operating mode after the first standby mode or the second standby mode, the third converter can be configured to supply a voltage of a third level, greater than the second level, to the signal processing device based on an on state of the relay, operation of the second converter, and operation of the third converter. Accordingly, an operating voltage can be stably supplied to the signal processing device through the third converter.

Meanwhile, in response to the first standby mode being switched to the second standby mode, the switch can be turned on, and the voltage of the second level greater than the first level can be supplied to the signal processing device. Accordingly, it is possible to reduce power consumption in the standby mode.

Meanwhile, in response to the second standby mode being switched to the first standby mode, the switch can be turned off, and the voltage of the first level can be supplied to the signal processing device. Accordingly, it is possible to reduce power consumption in the standby mode.

Meanwhile, the image display apparatus can further include a voltage dropper configured to drop a level of a DC voltage from the converter and output the voltage of the first level, wherein in the first standby mode, the image display apparatus can be configured to supply the voltage of the first level to the controller based on an off state of the relay, an off state of the switch, operation of the converter, and operation of the voltage dropper, and in the second standby mode, the voltage of the second level greater than the first level is supplied to the signal processing device based on an off state of the relay, operation of the switch, and operation of the converter. Accordingly, it is possible to reduce power consumption in the standby mode.

Meanwhile, the converter can be configured to output a voltage of a fourth level greater than the first level in the first standby mode, and output the voltage of the second level greater than the fourth level in the second standby mode. Accordingly, it is possible to reduce power consumption in the standby mode.

Meanwhile, the converter can be configured to output a voltage of a fourth level greater than the first level in the first standby mode, and the voltage dropper can be configured to drop the voltage of the fourth level to the first level in the first standby mode. Accordingly, it is possible to reduce power consumption in the standby mode.

Meanwhile, the voltage dropper can be configured to drop the voltage of the second level to the first level in the second standby mode. Accordingly, it is possible to reduce power consumption in the standby mode.

Meanwhile, the converter can include a flyback converter. Accordingly, it is possible to reduce power consumption in the standby mode.

An image display apparatus according to another embodiment of the present disclosure includes: a display; a signal processing device configured to output an image signal to the display; a relay configured to switch an input AC voltage; a converter connected in parallel to a first end of the relay; a voltage dropper configured to drop a level of a DC voltage from the converter; a controller configured to operate based on a DC voltage from the converter; and a switch disposed between the converter and the signal processing device, and configured to operate based on a control signal output from the controller, wherein in a first standby mode, a voltage of a first level is supplied to the controller based on an off state of the relay, an off state of the switch, operation of the converter, and operation of the voltage dropper, and in a second standby mode, a voltage of a second level greater than the first level is supplied to the signal processing device based on an off state of the relay, operation of the switch, and operation of the converter. Accordingly, it is possible to reduce power consumption in the standby mode. Particularly, in a plurality of standby modes, power consumption in each standby mode can be reduced.

Meanwhile, the image display apparatus can further include: a second converter connected to a second end of the relay and configured to convert the input AC voltage from the relay into a DC voltage; and a third converter configured to convert a level of the DC voltage from the second converter. Accordingly, an operating voltage can be stably supplied to the signal processing device through the third converter.

Meanwhile, in an operating mode after the first standby mode or the second standby mode, the third converter can be configured to supply a voltage of a third level, greater than the second level, to the signal processing device based on an on state of the relay, operation of the second converter, and operation of the third converter. Accordingly, an operating voltage can be stably supplied to the signal processing device through the third converter.

### BRIEF DESCRIPTION OF THE DRAWINGS

FIG. 1 is a diagram showing an image display apparatus according to an embodiment of the present disclosure;
FIG. 2 is an example of an internal block diagram of the image display apparatus;
FIG. 3 is an example of an internal block diagram of a signal processing device of FIG. 2;
FIG. 4A is a diagram showing a method of controlling a remote controller of FIG. 2;
FIG. 4B is an internal block diagram of the remote controller of FIG. 2;
FIG. 5 is an exemplary internal block diagram of a display of FIG. 2;
FIGS. 6A and 6B are diagrams referred to in the description of an organic light-emitting panel of FIG. 5;
FIG. 7 is an exemplary internal block diagram of an image display apparatus according to an embodiment of the present disclosure;
FIG. 8 is an exemplary circuit diagram of a second converter in FIG. 7;
FIG. 9 is an exemplary circuit diagram of a third converter in FIG. 7;
FIG. 10 is an exemplary circuit diagram of a converter in FIG. 7;
FIG. 11 is an exemplary internal block diagram of an image display apparatus associated with the present disclosure;
FIGS. 12A to 12E are diagrams referred to in the description of FIG. 11;
FIG. 13 is an exemplary internal block diagram of an image display apparatus according to an embodiment of the present disclosure;
FIGS. 14A to 16D are diagrams referred to in the description of FIG. 13;
FIG. 17 is an exemplary internal block diagram of an image display apparatus according to another embodiment of the present disclosure;
FIG. 18 is an exemplary internal block diagram of an image display apparatus according to yet another embodiment of the present disclosure;
FIGS. 19A to 19D are diagrams referred to in the description of FIG. 18; and
FIG. 20 is an exemplary internal block diagram of an image display apparatus according to yet another embodiment of the present disclosure.

### DETAILED DESCRIPTION OF THE PREFERRED EMBODIMENTS

Hereinafter, the present disclosure will be described in further detail with reference to the accompanying drawings.

Regarding constituent elements used in the following description, suffixes "module" and "unit" are given only in consideration of ease in the preparation of the specification, and do not have or serve as different meanings. Accordingly, the suffixes "module" and "unit" can be used interchangeably.

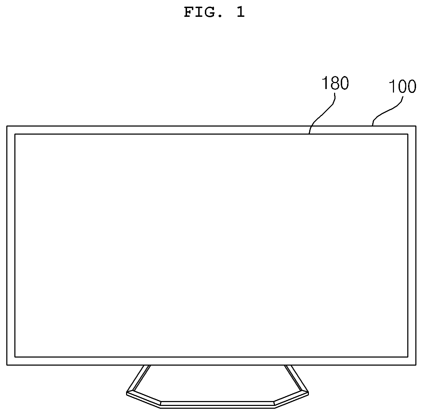

FIG. 1 is a diagram showing an image display apparatus according to an embodiment of the present disclosure.

Referring to the figure, an image display apparatus 100 can include a display 180.

The display resolution of the display 180 is getting higher and higher from 2K to 4K to 8K to 16K and higher, and the peak luminance of the display 180 is also increasing. Accordingly, the consumption of power supplied to the display 180 becomes higher.

Meanwhile, the display 180 can be implemented by one of various panels. For example, the display 180 can be one of a liquid crystal display panel (LCD panel), an organic light-emitting panel (OLED panel), and an inorganic light-emitting panel (LED panel).

The liquid crystal display panel can require a backlight in addition to a panel for image display.

On the other hand, the organic light-emitting panel or the inorganic light-emitting panel requires no backlight for image display.

The image display apparatus 100 according to an embodiment of the present disclosure provides a method of reducing power consumption in a standby mode, particularly, a method of reducing power consumption in each of a plurality of standby modes.

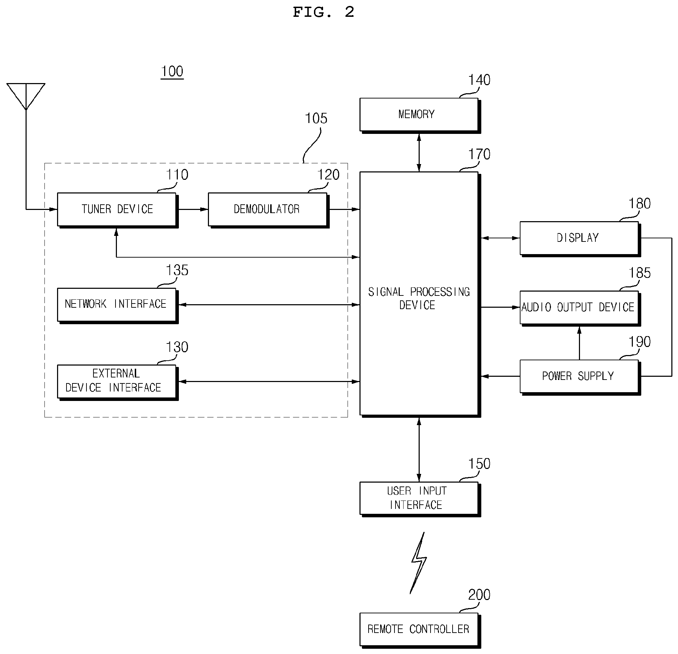

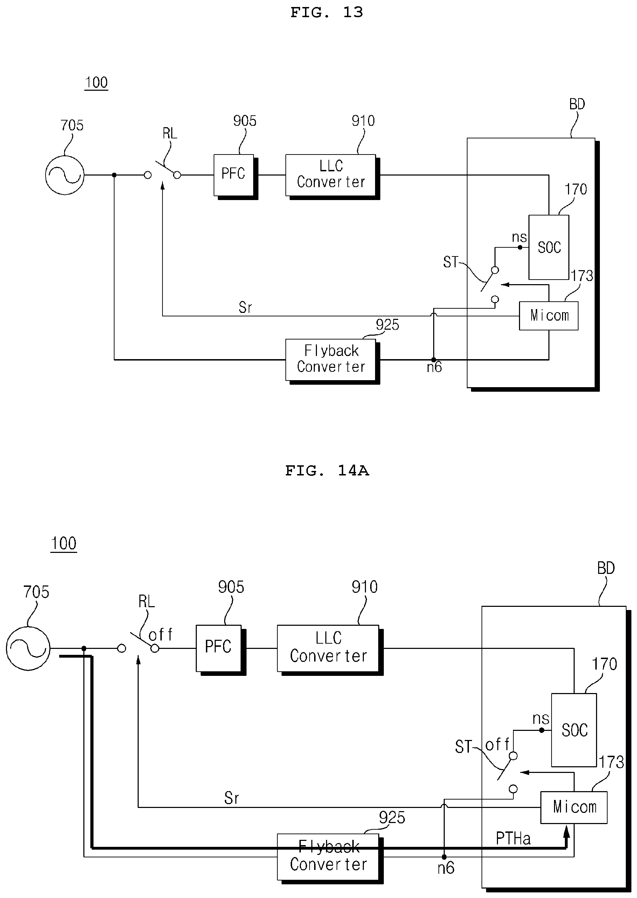

To this end, the image display apparatus 100 according to an embodiment of the present disclosure includes a display 180; a signal processing device 170 (see FIG. 2) configured to output an image signal to the display 180; a relay RL (see FIG. 13) configured to switch an input AC voltage Va; a converter 925 (see FIG. 13) connected in parallel to a first end n2 of the relay RL; a microcontroller 173 (see FIG. 13) configured to operate based on a DC voltage from the converter 925; and a switch ST (see FIG. 13) disposed between the converter 925 and the signal processing device 170 and configured to operate based on a control signal output from the microcontroller 173.

Meanwhile, in a first standby mode, the image display apparatus 100 according to an embodiment of the present disclosure is configured to supply a voltage Vzw of a first level to the microcontroller 173 based on an off state of the relay RL, an off state of the switch ST, and the operation of the converter 925.

Meanwhile, in a second standby mode, the image display apparatus 100 according to an embodiment of the present disclosure is configured to supply a voltage Vst of a second level, greater than the first level, to the signal processing device 170 based on an off state of the relay RL, the operation of the switch ST, and the operation of the converter 925. Accordingly, it is possible to reduce power consumption in the standby mode. Particularly, in a plurality of standby modes, power consumption in each standby mode can be reduced.

Meanwhile, the image display apparatus 100 of FIG. 1 can be a TV, a monitor, a vehicle display device, a tablet PC, a mobile terminal, and the like.

FIG. 2 is an example of an internal block diagram of the image display apparatus of FIG. 1.

Referring to FIG. 2, the image display apparatus 100 according to an embodiment of the present disclosure includes an image receiver 105, an external apparatus interface 130, a memory 140, a user input interface 150, a sensor device (not shown), a signal processing device 170, a display 180, and an audio output device 185.

The image receiver 105 can include a tuner 110, a demodulator 120, a network interface 135, and an external apparatus interface 130.

Meanwhile, unlike the figure, the image receiver 105 can include only the tuner 110, the demodulator 120, and the external apparatus interface 130. That is, the network interface 135 can not be included.

The tuner 110 selects an RF broadcast signal corresponding to a channel selected by a user or all prestored channels among radio frequency (RF) broadcast signals received through an antenna (not shown). In addition, the selected RF broadcast signal is converted into an intermediate frequency signal, a baseband image, or an audio signal.

For example, if the selected RF broadcast signal is a digital broadcast signal, the tuner 110 converts the digital broadcast signal into a digital IF (DIF) signal and, if the selected RF broadcast signal is an analog broadcast signal, the tuner 110 converts the analog broadcast signal into an analog baseband image or voice (CVBS/SIF) signal. That is, the tuner 110 can process a digital broadcast signal or an analog broadcast signal. The analog baseband image or voice (CVBS/SIF) signal output from the tuner 110 can be directly input to the signal processing device 170.

Meanwhile, the tuner 110 can include a plurality of tuners for receiving broadcast signals of a plurality of channels. Alternatively, a single tuner that simultaneously receives broadcast signals of a plurality of channels is also available.

The demodulator 120 receives the converted digital IF signal DIF from the tuner 110 and performs a demodulation operation.

The demodulator 120 can perform demodulation and channel decoding and then output a stream signal TS. At this time, the stream signal can be a multiplexed signal of an image signal, an audio signal, or a data signal.

The stream signal output from the demodulator 120 can be input to the signal processing device 170. The signal processing device 170 performs demultiplexing, image/audio signal processing, and the like, and then outputs an image to the display 180 and outputs audio to the audio output device 185.

The external apparatus interface 130 can transmit or receive data with a connected external apparatus (not shown), e.g., a set-top box 50. To this end, the external apparatus interface 130 can include an A/V input and output device (not shown).

The external apparatus interface 130 can be connected in wired or wirelessly to an external apparatus, such as a digital versatile disk (DVD), a Blu ray, a game equipment, a camera, a camcorder, a computer (note book), and a set-top box, and can perform an input/output operation with an external apparatus.

The A/V input and output device can receive image and audio signals from an external apparatus. Meanwhile, a wireless transceiver (not shown) can perform short-range wireless communication with other electronic apparatus.

Through the wireless transceiver (not shown), the external apparatus interface 130 can exchange data with an adjacent mobile terminal 600. In particular, in a mirroring mode, the external apparatus interface 130 can receive device information, executed application information, application image, and the like from the mobile terminal 600.

The network interface 135 provides an interface for connecting the image display apparatus 100 to a wired/wireless network including the Internet network. For example, the network interface 135 can receive, via the network, content or data provided by the Internet, a content provider, or a network operator.

Meanwhile, the network interface 135 can include a wireless transceiver (not shown).

The memory 140 can store a program for each signal processing and control in the signal processing device 170, and can store signal-processed image, audio, or data signal.

In addition, the memory 140 can serve to temporarily store image, audio, or data signal input to the external apparatus interface 130. In addition, the memory 140 can store information on a certain broadcast channel through a channel memory function, such as a channel map.

Although FIG. 2 illustrates that the memory is provided separately from the signal processing device 170, the scope of the present disclosure is not limited thereto. The memory 140 can be included in the signal processing device 170.

The user input interface 150 transmits a signal input by the user to the signal processing device 170 or transmits a signal from the signal processing device 170 to the user.

For example, it can transmit/receive a user input signal, such as power on/off, channel selection, screen setting, etc., from a remote controller 200, can transfer a user input signal input from a local key (not shown), such as a power key, a channel key, a volume key, a set value, etc., to the signal processing device 170, can transfer a user input signal input from a sensor device (not shown) that senses a user's gesture to the signal processing device 170, or can transmit a signal from the signal processing device 170 to the sensor device (not shown).

The signal processing device 170 can demultiplex the input stream through the tuner 110, the demodulator 120, the network interface 135, or the external apparatus interface 130, or process the demultiplexed signals to generate and output a signal for image or audio output.

For example, the signal processing device 170 receives a broadcast signal received by the image receiver 105 or an HDMI signal, and perform signal processing based on the received broadcast signal or the HDMI signal to thereby output a processed image signal.

The image signal processed by the signal processing device 170 is input to the display 180, and can be displayed as an image corresponding to the image signal. In addition, the image signal processed by the signal processing device 170 can be input to the external output apparatus through the external apparatus interface 130.

The audio signal processed by the signal processing device 170 can be output to the audio output device 185 as an audio signal. In addition, audio signal processed by the signal processing device 170 can be input to the external output apparatus through the external apparatus interface 130.

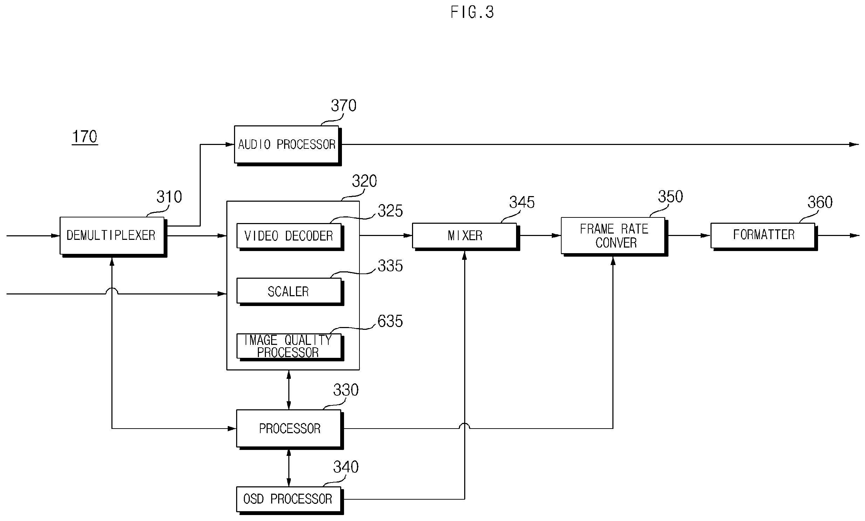

Although not shown in FIG. 2, the signal processing device 170 can include a demultiplexer, an image processor, and the like. That is, the signal processing device 170 can perform a variety of signal processing and thus it can be implemented in the form of a system on chip (SOC). This will be described later with reference to FIG. 3.

In addition, the signal processing device 170 can control the overall operation of the image display apparatus 100. For example, the signal processing device 170 can control the tuner 110 to control the tuning of the RF broadcast corresponding to the channel selected by the user or the previously stored channel.

In addition, the signal processing device 170 can control the image display apparatus 100 according to a user command input through the user input interface 150 or an internal program.

Meanwhile, the signal processing device 170 can control the display 180 to display an image. At this time, the image displayed on the display 180 can be a still image or a moving image, and can be a 2D image or a 3D image.

Meanwhile, the signal processing device 170 can display a certain object in an image displayed on the display 180. For example, the object can be at least one of a connected web screen (newspaper, magazine, etc.), an electronic program guide (EPG), various menus, a widget, an icon, a still image, a moving image, and a text.

Meanwhile, the signal processing device 170 can recognize the position of the user based on the image photographed by a photographing device (not shown). For example, the distance (z-axis coordinate) between a user and the image display apparatus 100 can be determined. In addition, the x-axis coordinate and the y-axis coordinate in the display 180 corresponding to a user position can be determined.

The display 180 generates a driving signal by converting an image signal, a data signal, an OSD signal, a control signal processed by the signal processing device 170, an image signal, a data signal, a control signal, and the like received from the external apparatus interface 130.

Meanwhile, the display 180 can be configured as a touch screen and used as an input device in addition to an output device.

The audio output device 185 receives a signal processed by the signal processing device 170 and outputs it as an audio.

The photographing device (not shown) photographs a user. The photographing device (not shown) can be implemented by a single camera, but the present disclosure is not limited thereto and can be implemented by a plurality of cameras. Image information photographed by the photographing device (not shown) can be input to the signal processing device 170.

The signal processing device 170 can sense a gesture of the user based on each of the images photographed by the photographing device (not shown), the signals detected from the sensor device (not shown), or a combination thereof.

The power supply 190 supplies corresponding power to the image display apparatus 100. Particularly, the power can be supplied to a signal processing device 170 which can be implemented in the form of a system on chip (SOC), a display 180 for displaying an image, and an audio output device 185 for outputting an audio.

Specifically, the power supply 190 can include a converter to convert an AC power into a DC voltage, and a THIRD converter to convert the level of the DC voltage.

The remote controller 200 transmits the user input to the user input interface 150. To this end, the remote controller 200 can use Bluetooth, a radio frequency (RF) communication, an infrared (IR) communication, an Ultra Wideband (UWB), ZigBee, or the like. In addition, the remote controller 200 can receive the image, audio, or data signal output from the user input interface 150, and display it on the remote controller 200 or output it as an audio.

Meanwhile, the image display apparatus 100 can be a fixed or mobile digital broadcast receiver capable of receiving digital broadcast.

Meanwhile, a block diagram of the image display apparatus 100 shown in FIG. 2 is a block diagram for an embodiment of the present disclosure. Each component of the block diagram can be integrated, added, or omitted according to a specification of the image display apparatus 100 actually implemented. That is, two or more components can be combined into a single component as needed, or a single component can be split into two or more components. The function performed in each block is described for the purpose of illustrating embodiments of the present disclosure, and specific operation and apparatus do not limit the scope of the present disclosure.

FIG. 3 is an example of an internal block diagram of the signal processing device in FIG. 2.

Referring to the figure, the signal processing device 170 according to an embodiment of the present disclosure can include a demultiplexer 310, an image processor 320, a processor 330, and an audio processor 370. In addition, the signal processing device 170 can further include and a data processor (not shown).

The demultiplexer 310 demultiplexes the input stream. For example, when an MPEG-2 TS is input, it can be demultiplexed into image, audio, and data signal, respectively. Here, the stream signal input to the demultiplexer 310 can be a stream signal output from the tuner 110, the demodulator 120, or the external apparatus interface 130.

The image processor 320 can perform signal processing on an input image. For example, the image processor 320 can perform image processing on an image signal demultiplexed by the demultiplexer 310.

To this end, the image processor 320 can include an image decoder 325, a scaler 335, an image quality processor 635, an image encoder (not shown), an OSD processor 340, a frame rate converter 350, a formatter 360, etc.

The image decoder 325 decodes a demultiplexed image signal, and the scaler 335 performs scaling so that the resolution of the decoded image signal can be output from the display 180.

The image decoder 325 can include a decoder of various standards. For example, a 3D image decoder for MPEG-2, H.264 decoder, a color image, and a depth image, and a decoder for a multiple view image can be provided.

The scaler 335 can scale an input image signal decoded by the image decoder 325 or the like.

For example, if the size or resolution of an input image signal is small, the scaler 335 can upscale the input image signal, and, if the size or resolution of the input image signal is great, the scaler 335 can downscale the input image signal.

The image quality processor 635 can perform image quality processing on an input image signal decoded by the image decoder 325 or the like.

For example, the image quality processor 635 can perform noise reduction processing on an input image signal, extend a resolution of high gray level of the input image signal, perform image resolution enhancement, perform high dynamic range (HDR)-based signal processing, change a frame rate, perform image quality processing suitable for properties of a panel, especially an OLED panel, etc.

The OSD processor 340 generates an OSD signal according to a user input or by itself. For example, based on a user input signal, the OSD processor 340 can generate a signal for displaying various information as a graphic or a text on the screen of the display 180. The generated OSD signal can include various data, such as a user interface screen of the image display apparatus 100, various menu screens, a widget, and an icon. In addition, the generated OSD signal can include a 2D object or a 3D object.

In addition, the OSD processor 340 can generate a pointer that can be displayed on the display, based on a pointing signal input from the remote controller 200. In particular, such a pointer can be generated by a pointing signal processing device, and the OSD processor 340 can include such a pointing signal processing device (not shown). Obviously, the pointing signal processing device (not shown) can be provided separately from the OSD processor 340.

The frame rate converter (FRC) 350 can convert a frame rate of an input image. Meanwhile, the frame rate converter 350 can output the input image without converting the frame rate.

Meanwhile, the formatter 360 can change a format of an input image signal into a format suitable for displaying the image signal on a display and output the image signal in the changed format.

In particular, the formatter 360 can change a format of an image signal to correspond to a display panel.

Further, the formatter 360 can convert the format of an image signal. For example, the formatter 360 can convert the format of a 3D image signal into one of various 3D formats, including a side-by-side format, a top/down format, a frame sequential format, an interlaced format, a checker box format, etc.

The processor 330 can control overall operations of the image display apparatus 100 or the signal processing device 170.

For example, the processor 330 can control the tuner 110 to control the tuning of an RF broadcast corresponding to a channel selected by a user or a previously stored channel.

In addition, the processor 330 can control the image display apparatus 100 according to a user command input through the user input interface 150 or an internal program.

In addition, the processor 330 can transmit data to the network interface 135 or to the external apparatus interface 130.

In addition, the processor 330 can control the demultiplexer 310, the image processor 320, and the like in the signal processing device 170.

Meanwhile, the audio processor 370 in the signal processing device 170 can perform the audio processing of the demultiplexed audio signal. To this end, the audio processor 370 can include various decoders.

In addition, the audio processor 370 in the signal processing device 170 can process a base, a treble, a volume control, and the like.

The data processor (not shown) in the signal processing device 170 can perform data processing of the demultiplexed data signal. For example, when the demultiplexed data signal is a coded data signal, it can be decoded. The encoded data signal can be electronic program guide information including broadcast information, such as a start time and an end time of a broadcast program broadcasted on each channel.

Meanwhile, a block diagram of the signal processing device 170 shown in FIG. 3 is a block diagram for an embodiment of the present disclosure. Each component of the block diagram can be integrated, added, or omitted according to a specification of the signal processing device 170 actually implemented.

In particular, the frame rate converter 350 and the formatter 360 can be provided separately in addition to the image processor 320.

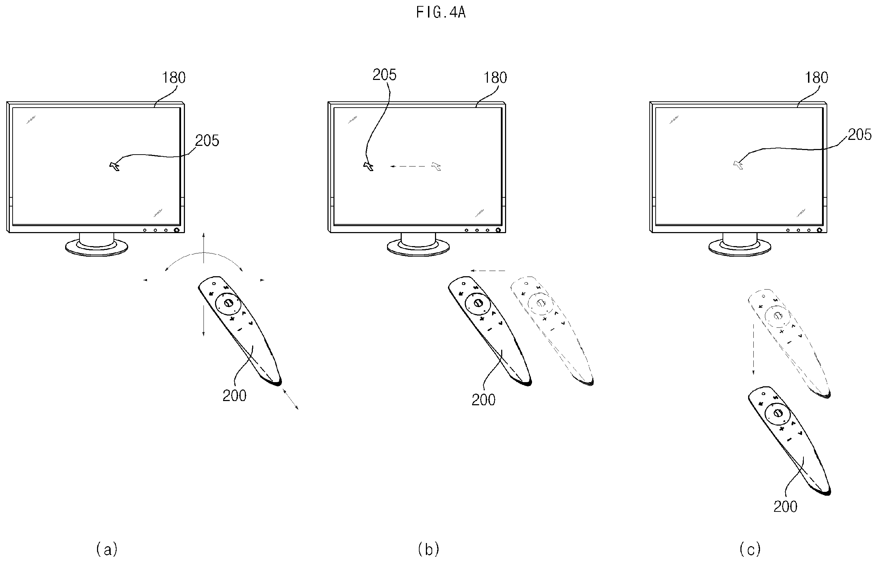

FIG. 4A is a diagram illustrating a control method of a remote controller of FIG. 2.

As shown in FIG. 4A(a), it is illustrated that a pointer 205 corresponding to the remote controller 200 is displayed on the display 180.

The user can move or rotate the remote controller 200 up and down, left and right (FIG. 4A(b)), and back and forth (FIG. 4A(c)). The pointer 205 displayed on the display 180 of the image display apparatus corresponds to the motion of the remote controller 200. Such a remote controller 200 can be referred to as a space remote controller or a 3D pointing apparatus, because the pointer 205 is moved and displayed according to the movement in a 3D space, as shown in the figure.

FIG. 4A(b) illustrates that when the user moves the remote controller 200 to the left, the pointer 205 displayed on the display 180 of the image display apparatus also moves to the left correspondingly.

Information on the motion of the remote controller 200 detected through a sensor of the remote controller 200 is transmitted to the image display apparatus. The image display apparatus can calculate the coordinate of the pointer 205 from the information on the motion of the remote controller 200. The image display apparatus can display the pointer 205 to correspond to the calculated coordinate.

FIG. 4A(c) illustrates a case where the user moves the remote controller 200 away from the display 180, while pressing a specific button of the remote controller 200. Thus, a selection area within the display 180 corresponding to the pointer 205 can be zoomed in so that it can be displayed to be enlarged. Meanwhile, when the user moves the remote controller 200 close to the display 180, the selection area within the display 180 corresponding to the pointer 205 can be zoomed out so that it can be displayed to be reduced. Meanwhile, when the remote controller 200 moves away from the display 180, the selection area can be zoomed out, and when the remote controller 200 approaches the display 180, the selection area can be zoomed in.

Meanwhile, when the specific button of the remote controller 200 is pressed, it is possible to exclude the recognition of vertical and lateral movement. That is, when the remote controller 200 moves away from or approaches the display 180, the up, down, left, and right movements are not recognized, and only the forward and backward movements are recognized. Only the pointer 205 is moved according to the up, down, left, and right movements of the remote controller 200 in a state where the specific button of the remote controller 200 is not pressed.

Meanwhile, the moving speed or the moving direction of the pointer 205 can correspond to the moving speed or the moving direction of the remote controller 200.

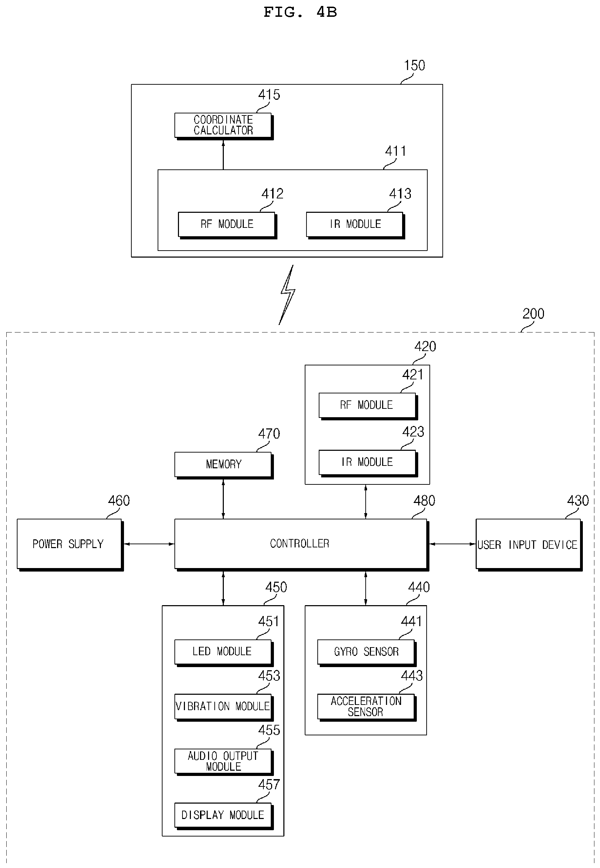

FIG. 4B is an internal block diagram of the remote controller of FIG. 2.

Referring to the figure, the remote controller 200 includes a wireless transceiver 425, a user input device 435, a sensor device 440, an output device 450, a power supply 460, a memory 470, and a controller 480.

The wireless transceiver 425 transmits/receives a signal to/from any one of the image display apparatuses according to the embodiments of the present disclosure described above. Among the image display apparatuses according to the embodiments of the present disclosure, one image display apparatus 100 will be described as an example.

In the present embodiment, the remote controller 200 can include an RF module 421 for transmitting and receiving signals to and from the image display apparatus 100 according to a RF communication standard. In addition, the remote controller 200 can include an IR module 423 for transmitting and receiving signals to and from the image display apparatus 100 according to a IR communication standard.

In the present embodiment, the remote controller 200 transmits a signal containing information on the motion of the remote controller 200 to the image display apparatus 100 through the RF module 421.

In addition, the remote controller 200 can receive the signal transmitted by the image display apparatus 100 through the RF module 421. In addition, if necessary, the remote controller 200 can transmit a command related to power on/off, channel change, volume change, and the like to the image display apparatus 100 through the IR module 423.

The user input device 435 can be implemented by a keypad, a button, a touch pad, a touch screen, or the like. The user can operate the user input device 435 to input a command related to the image display apparatus 100 to the remote controller 200. When the user input device 435 includes a hard key button, the user can input a command related to the image display apparatus 100 to the remote controller 200 through a push operation of the hard key button. When the user input device 435 includes a touch screen, the user can touch a soft key of the touch screen to input the command related to the image display apparatus 100 to the remote controller 200. In addition, the user input device 435 can include various types of input means, such as a scroll key, a jog key, etc., which can be operated by the user, and the present disclosure does not limit the scope of the present disclosure.

The sensor device 440 can include a gyro sensor 441 or an acceleration sensor 443. The gyro sensor 441 can sense information regarding the motion of the remote controller 200.

For example, the gyro sensor 441 can sense information on the operation of the remote controller 200 based on the x, y, and z axes. The acceleration sensor 443 can sense information on the moving speed of the remote controller 200. Meanwhile, a distance measuring sensor can be further provided, and thus, the distance to the display 180 can be sensed.

The output device 450 can output an image or an audio signal corresponding to the operation of the user input device 435 or a signal transmitted from the image display apparatus 100. Through the output device 450, the user can recognize whether the user input device 435 is operated or whether the image display apparatus 100 is controlled.

For example, the output device 450 can include an LED module 451 that is turned on when the user input device 435 is operated or a signal is transmitted/received to/from the image display apparatus 100 through the wireless transceiver 425, a vibration module 453 for generating a vibration, an audio output module 455 for outputting an audio, or a display module 457 for outputting an image.

The power supply 460 supplies power to the remote controller 200. When the remote controller 200 is not moved for a certain time, the power supply 460 can stop the supply of power to reduce a power waste. The power supply 460 can resume power supply when a certain key provided in the remote controller 200 is operated.

The memory 470 can store various types of programs, application data, and the like necessary for the control or operation of the remote controller 200. If the remote controller 200 wirelessly transmits and receives a signal to/from the image display apparatus 100 through the RF module 421, the remote controller 200 and the image display apparatus 100 transmit and receive a signal through a certain frequency band. The controller 480 of the remote controller 200 can store information regarding a frequency band or the like for wirelessly transmitting and receiving a signal to/from the image display apparatus 100 paired with the remote controller 200 in the memory 470 and can refer to the stored information.

The controller 480 controls various matters related to the control of the remote controller 200. The controller 480 can transmit a signal corresponding to a certain key operation of the user input device 435 or a signal corresponding to the motion of the remote controller 200 sensed by the sensor device 440 to the image display apparatus 100 through the wireless transceiver 425.

The user input interface 150 of the image display apparatus 100 includes a wireless transceiver 151 that can wirelessly transmit and receive a signal to and from the remote controller 200 and a coordinate value calculator 415 that can calculate the coordinate value of a pointer corresponding to the operation of the remote controller 200.

The user input interface 150 can wirelessly transmit and receive a signal to and from the remote controller 200 through the RF module 412. In addition, the user input interface 150 can receive a signal transmitted by the remote controller 200 through the IR module 413 according to a IR communication standard.

The coordinate value calculator 415 can correct a hand shake or an error from a signal corresponding to the operation of the remote controller 200 received through the wireless transceiver 151 and calculate the coordinate value (x, y) of the pointer 205 to be displayed on the display 180.

The transmission signal of the remote controller 200 inputted to the image display apparatus 100 through the user input interface 150 is transmitted to the controller 180 of the image display apparatus 100. The controller 180 can determine the information on the operation of the remote controller 200 and the key operation from the signal transmitted from the remote controller 200, and, correspondingly, control the image display apparatus 100.

For another example, the remote controller 200 can calculate the pointer coordinate value corresponding to the operation and output it to the user input interface 150 of the image display apparatus 100. In this case, the user input interface 150 of the image display apparatus 100 can transmit information on the received pointer coordinate value to the controller 180 without a separate correction process of hand shake or error.

For another example, unlike the figure, the coordinate value calculator 415 can be provided in the signal processing device 170, not in the user input interface 150.

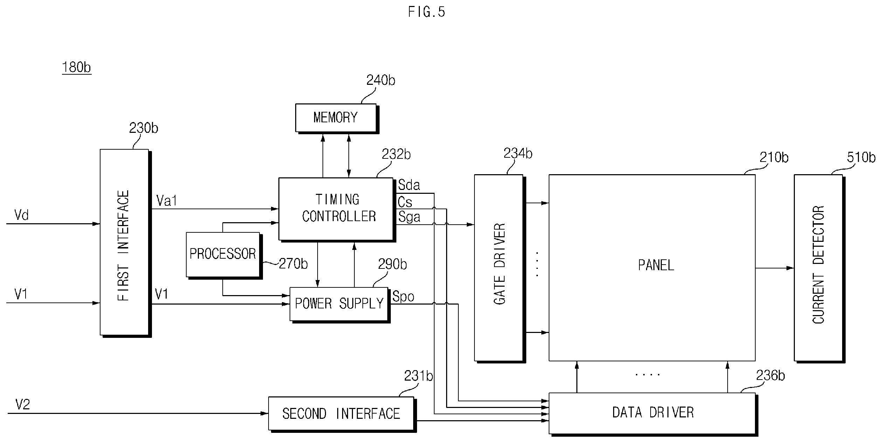

FIG. 5 is an exemplary internal block diagram of a display of FIG. 2.

Referring to FIG. 5, an organic light-emitting panel-based display 180b can include an organic light-emitting panel 210b, a first interface 230b, a second interface 231b, a timing controller 232b, a gate driver 234b, a data driver 236b, a memory 240b, a processor 270b, a power supply 290b, a current detector 510b, and the like.

The display 180b receives an image signal Vdb, a first DC voltage V1b, and a second DC voltage V2b, and can display a certain image based on the image signal Vdb.

Meanwhile, the first interface 230b in the display 180b can receive the image signal Vdb and the first DC voltage V1b from the signal processing device 170b.

Here, the first DC voltage V1b can be used for the operation of the power supply 290b and the timing controller 232b in the display 180b.

Next, the second interface 231b can receive a second DC voltage V2b from an external power supply 190b. Meanwhile, the second DC voltage V2b can be input to the data driver 236b in the display 180b.

The timing controller 232b can output a data driving signal Sdab and a gate driving signal Sgab, based on the image signal Vdb.

For example, when the first interface 230b converts the input image signal Vdb and outputs the converted image signal va1b, the timing controller 232b can output the data driving signal Sdab and the gate driving signal Sgab based on the converted image signal va1b.

The timing controller 232b can further receive a control signal, a vertical synchronization signal Vsyncb, and the like, in addition to the image signal Vdb from the signal processing device 170b.

In addition to the image signal Vdb, based on a control signal, a vertical synchronization signal Vsyncb, and the like, the timing controller 232b generates a gate driving signal Sgab for the operation of the gate driver 234b, and a data driving signal Sdab for the operation of the data driver 236b.

At this time, when the panel 210b includes a RGBW subpixel, the data driving signal Sdab can be a data driving signal for driving of RGBW subpixel.

Meanwhile, the timing controller 232b can further output a control signal Csb to the gate driver 234b.

The gate driver 234b and the data driver 236b supply a scan signal and an image signal to the organic light-emitting panel 210b through a gate line GLb and a data line DLb, respectively, according to the gate driving signal Sgab and the data driving signal Sdab from the timing controller 232b. Accordingly, the organic light-emitting panel 210b displays a certain image.

Meanwhile, the panel 210b can include an organic light emitting layer. In order to display an image, a plurality of gate lines GLb and data lines DLb can be disposed in a matrix form in each pixel corresponding to the organic light emitting layer.

Meanwhile, the data driver 236b can output a data signal to the organic light-emitting panel 210b based on a second DC voltage V2b from the second interface 231b.

The power supply 290b can supply various power supplies to the gate driver 234b, the data driver 236b, the timing controller 232b, and the like.

The current detector 510b can detect the current flowing in a sub-pixel of the panel 210b. The detected current can be input to the processor 270b or the like, for a cumulative current calculation.

The processor 270b can perform each type of control of the display 180b. For example, the processor 270b can control the gate driver 234b, the data driver 236b, the timing controller 232b, and the like.

Meanwhile, the processor 270b can receive current information flowing in a sub-pixel of the panel 210b from the current detector 510b.

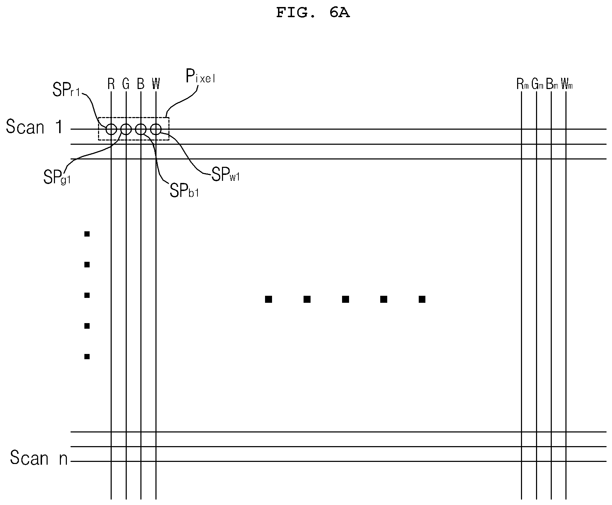

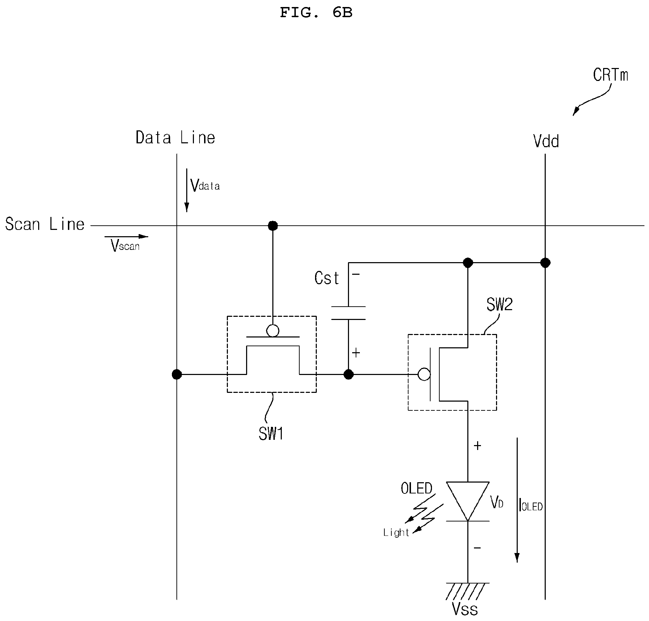

FIGS. 6A and 6B are diagrams referred to in the description of an organic light-emitting panel of FIG. 5.

First, FIG. 6A is a diagram illustrating a pixel in the organic light-emitting panel 210b.

Referring to the figure, the organic light-emitting panel 210b can include a plurality of scan lines Scan1 to Scann and a plurality of data lines R1, G1, B1, W1 to Rm, Gm, Bm, Wm intersecting the scan lines.

Meanwhile, a pixel (subpixel) is defined in an intersecting area of the scan line and the data line in the organic light-emitting panel 210b. In the figure, a pixel including sub-pixels SR1, SG1, SB1, and SW1 of RGBW is shown.

FIG. 6B illustrates a circuit of any one sub-pixel in the pixel of the organic light-emitting panel of FIG. 6A.

Referring to the figure, an organic light-emitting sub pixel circuit CRTm can include, as an active type, a scan switching element SW1, a storage capacitor Cst, a drive switching element SW2, and an organic light emitting layer OLED.

The scan switching element SW1 is turned on according to the input scan signal Vdscan, as a scan line is connected to a gate terminal. When it is turned on, the input data signal Vdata is transferred to the gate terminal of a drive switching element SW2 or one end of the storage capacitor Cst.

The storage capacitor Cst is formed between the gate terminal and the source terminal of the drive switching element SW2, and stores a certain difference between a data signal level transmitted to one end of the storage capacitor Cst and a DC voltage (VDD) level transmitted to the other terminal of the storage capacitor Cst.

For example, when the data signal has a different level according to a Plume Amplitude Modulation (PAM) method, the power level stored in the storage capacitor Cst varies according to the level difference of the data signal Vdata.

For another example, when the data signal has a different pulse width according to a pulse width modulation (PWM) method, the power level stored in the storage capacitor Cst varies according to the pulse width difference of the data signal Vdata.

The drive switching element SW2 is turned on according to the power level stored in the storage capacitor Cst. When the drive switching element SW2 is turned on, the driving current (IOLED), which is proportional to the stored power level, flows in the organic light emitting layer (OLED). Accordingly, the organic light emitting layer OLED performs a light emitting operation.

The organic light emitting layer OLED can include a light emitting layer (EML) of RGBW corresponding to a subpixel, and can include at least one of a hole injecting layer (HIL), a hole transporting layer (HTL), an electron transporting layer (ETL), and an electron injecting layer (EIL). In addition, it can include a hole blocking layer, and the like.

Meanwhile, the subpixels emit a white light in the organic light emitting layer OLED. However, in the case of green, red, and blue subpixels, a subpixel is provided with a separate color filter for color implementation. That is, in the case of green, red, and blue subpixels, each of the subpixels further includes green, red, and blue color filters. Meanwhile, since a white subpixel outputs a white light, a separate color filter is not required.

Meanwhile, in the figure, it is illustrated that a p-type MOSFET is used for a scan switching element SW1 and a drive switching element SW2, but an n-type MOSFET or other switching element, such as a JFET, IGBT, SIC, or the like are also available.

Meanwhile, the pixel is a hold-type element that continuously emits light in the organic light emitting layer (OLED), after a scan signal is applied, during a unit display period, specifically, during a unit frame.

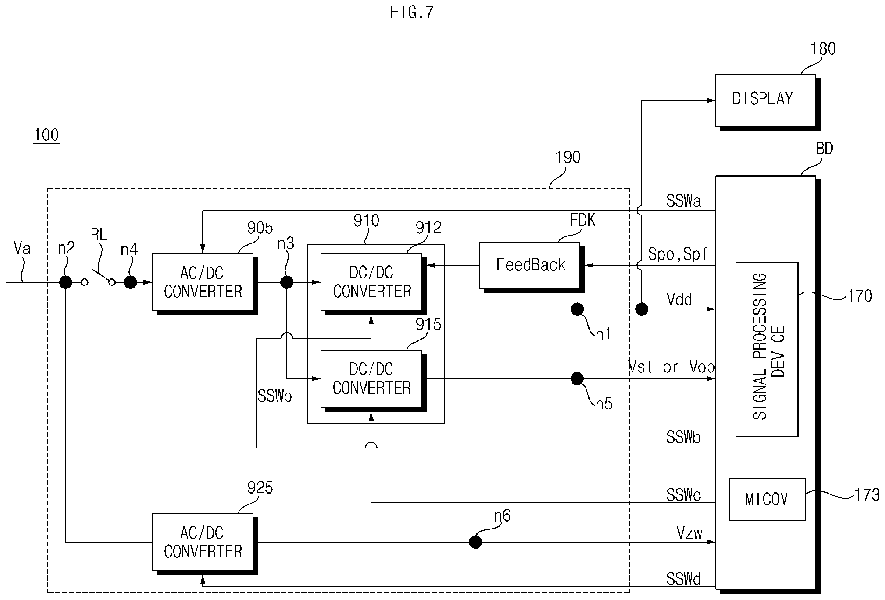

FIG. 7 is an exemplary internal block diagram of an image display apparatus according to an embodiment of the present disclosure.

Referring to the drawing, the image display apparatus 100 according to an embodiment of the present disclosure includes a display 180, a signal processing device 170 configured to output an image signal to the display 180, and a third converter 910 configured to supply a display driving voltage to the display 180.

The power supply 190 according to an embodiment of the present disclosure can include: a relay RL configured to switch an input AC voltage Va; a converter 925 connected in parallel to a first end n2 which is an input terminal of the relay RL; a second converter 905 connected to a second end n4 which is an output terminal of the relay RL and configured to convert the input AC voltage Va from the relay RL into a DC voltage; and a third converter 910 configured to convert a level of the DC voltage from the second converter 905.

Each of the converter 925 and the second converter 905 can be an AC/DC converter that converts the input AC voltage Va into the DC voltage.

The third converter 910 can convert the level of the DC voltage from the second converter 905 and output a display driving voltage Vdd to the display 180 or output an operating voltage Vop or a standby voltage Vst to the signal processing device 170.

To this end, the third converter 910 can include a multi-level LLC converter.

For example, the third converter 910 can include a first LLC converter 912 configured to output a display driving voltage Vdd of approximately 24 V, and a second LLC converter 915 configured to output an operating voltage Vop of approximately 12 V or a standby voltage Vst of approximately 8 V to the signal processing device 170.

In this case, the first LLC converter 912 and the second LLC converter 915 can be connected in parallel to each other.

It is illustrated in the drawing that the first LLC converter 912 is disposed between a node n3 and a node n1, and the second LLC converter 915 is disposed between the node n3 and a node n5.

Further, it is illustrated in the drawing that the converter 925 is disposed between the node n2 and a node n6, and the second converter 905 is disposed between the node n4 and the node n3.

Meanwhile, an output node n1 of the second converter 905 can be electrically connected to the display 180.

The second converter 905 can include a diode or a switching element, and convert an input AC voltage Va into a DC voltage and output it.

The third converter 910 can convert an input DC voltage and output the display driving voltage VDD.

For example, the third converter 910 can boost or step up the DC voltage and output the display driving voltage Vdd.

On the one hand, if the display 180 is an organic light-emitting panel, the display driving voltage Vdd can be a pixel driving voltage for an organic light-emitting pixel.

On the other hand, if the display 180 is an inorganic light-emitting panel, the display driving voltage Vdd can be a pixel driving voltage for an inorganic light-emitting pixel.

On the other hand, if the display 180 is a liquid crystal panel, the display driving voltage Vdd can be a backlight driving voltage or a liquid crystal pixel driving voltage.

Meanwhile, the image display apparatus 100 according to an embodiment of the present disclosure further includes a main board 900 including a signal processing device 170 and a microcomputer (controller) 173.

Meanwhile, the main board 900 or the signal processing device 170 can output a switch driving control signal SSwd to the converter 925. Accordingly, the converter 925 can be stably driven.

On the one hand, the main board 900 or the signal processing device 170 can output a switch driving control signal SSwa to the second converter 905. Accordingly, the second converter 905 can be stably driven.

Meanwhile, the main board 900 or the signal processing device 170 can output a switch driving control signal SSwb to the first LLC converter 913 in the third converter 910. Accordingly, the first LLC converter 913 in the third converter 910 can be stably driven.

Meanwhile, the mainboard 900 or the signal processing device 170 can output a switch driving control signal SSwc to the second LLC converter 915 in the third converter 910. Accordingly, the second LLC converter 915 in the third converter 910 can be stably driven.

Meanwhile, the power supply 190 can further include a signal transmitter FDK connected between the third converter 910 and the mainboard 900.

The signal transmitter FDK can receive a display-on signal Spo or a display-off signal Spf from the mainboard 900 including the signal processing device 170 or from the signal processing device 170, and transmit the display-on signal Spo or the display-off signal Spf to the third converter 910.

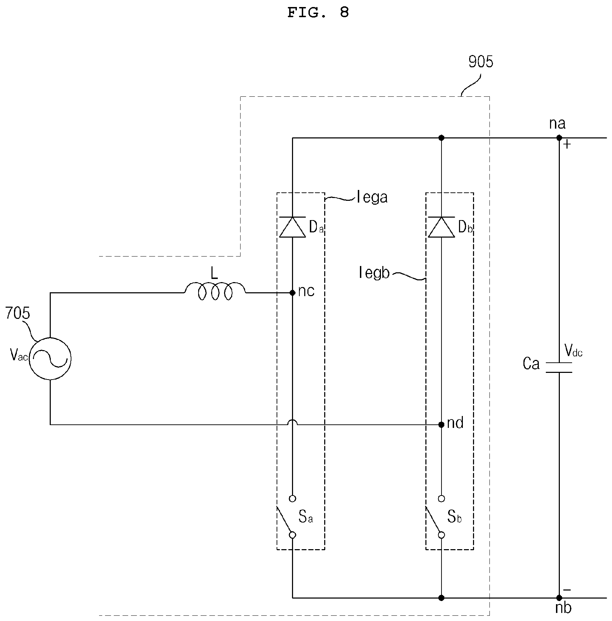

FIG. 8 is an exemplary circuit diagram of the second converter in FIG. 7.

Referring to the drawing, in order to efficiently supply high power, the second converter 905 in FIG. 7 can include a plurality of switching elements Sa and Sb and a plurality of diodes Da and Db, and can convert the level of an input AC voltage Vac based on a switching operation of the switching elements Sa and Sb and output a DC voltage Vdc.

Specifically, the second converter 905 can include a first leg lega including a first diode Da and a first switching element Sa that are connected in series to each other, and a second leg legb connected in parallel to the first leg lega and including a second diode Db and a second switching element Sb that are connected in series to each other.

One end (cathode) of the first diode Da can be connected to one end na of output ends na-nb of the second converter 905, and the other end (anode) of the first diode Da can be connected to a first node nc.

One end of the first switching element Sa can be connected to the first node nc, and the other end of the first switching element Sa can be connected to the other end nb of the output ends na-nb of the second converter 905.

One end (cathode) of the second diode Db can be connected to one end na of the output ends na-nb of the second converter 905, and the other end (anode) of the second diode Db can be connected to the second node (nd).

One end of the second switching element Sb can be connected to the second node nd, and the other end of the second switching element Sb can be connected to the other end nb of the output ends na-nb of the second converter 905.

Meanwhile, the second converter 905 in FIG. 8 can be referred to as a half bridge-type AC/DC converter.

Meanwhile, the second converter 905 can further include an inductor L disposed between the first node na, which is located between the first diode Da and the first switching element Sa, and an input end to which the input AC voltage Vac is input.

Meanwhile, the third converter 910, connected to both ends of the dc link capacitor Ca, can be connected to output ends nc-nd of the second converter 905.

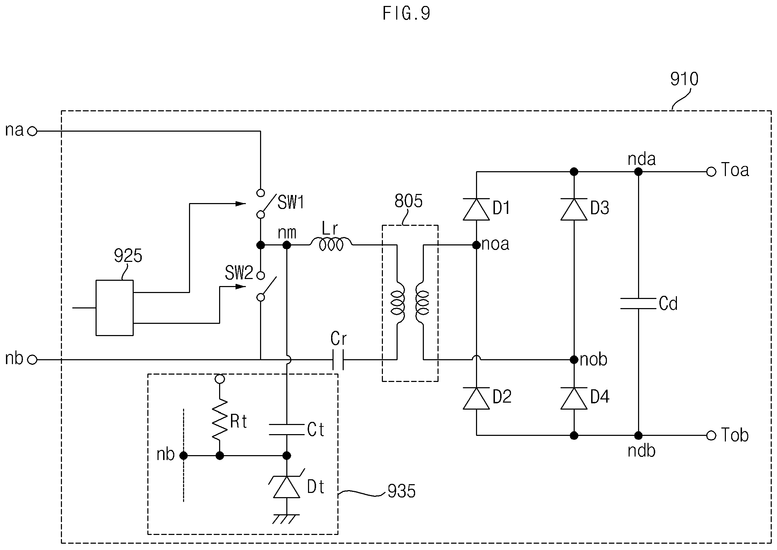

FIG. 9 is an exemplary circuit diagram of the third converter in FIG. 7.

Referring to the drawing, the third converter 910 can be a multi-level LLC converter.

The third converter 910 of FIG. 9 can be the first LLC converter 912 or the second LLC converter of FIG. 7.

The third converter 910 can include a transformer 805, a first switching element SW1 and a second switching element SW2 which are disposed at an input terminal of the transformer 805 and are connected in series to each other, and a resonant capacitor Cr and a resonant inductor Lr which are disposed between and respectively connected to the input terminal of the transformer 805 and the second switching element SW2. Accordingly, the display driving voltage Vdd, or the operating voltage Vop or the standby voltage Vst of the signal processing device 170 can be output based on resonance.

Meanwhile, the third converter 910 can further include full-bridge diodes D1 to D4 disposed at the output terminal of the transformer 805, and a capacitor element Cd disposed at both ends nda-ndb of the output terminal of the full-bridge diodes D1 to D4. Accordingly, the display driving voltage Vdd can be stably output based on resonance.

Preferably, no resistor element is disposed at both ends nda-ndb of the capacitor element Cd.

Since no resistor element is disposed at both ends nda-ndb of the capacitor element Cd, unnecessary power consumption caused by the resistor element can be reduced. Accordingly, the power consumption of the power supply 190 can be reduced.

Meanwhile, the third converter 910 can further include a voltage detection circuit 935 configured to detect a voltage across the second switching element SW2.

Meanwhile, if the voltage at both ends nm-nb of the second switching element SW2, which is detected by the voltage detection circuit 935, is zero voltage, the third converter 910 can turn on the second switching element SW2. Accordingly, it is possible to reduce noise by performing Zero Voltage Switching of the second switching element SW2.

Meanwhile, the voltage detection circuit 935 can include a capacitor Ct connected to a node nm between the first switching element SW1 and the second switching element SW2, a Zener diode Dt disposed between the capacitor Ct and a ground terminal, and a resistor element Rt having one end connected to a node nb between the capacitor Ct and the Zener diode Dt. Accordingly, the voltage across the second switching element SW2 can be stably detected.

Meanwhile, the third converter 910 can further include a switching controller 925 configured to control the first switching element SW1 and the second switching element SW2.

Meanwhile, the switching controller 925 can be configured to control Zero Voltage Switching of the second switching element SW2 based on a voltage at the nb node. Accordingly, it is possible to reduce noise by performing Zero Voltage Switching of the second switching element SW2.

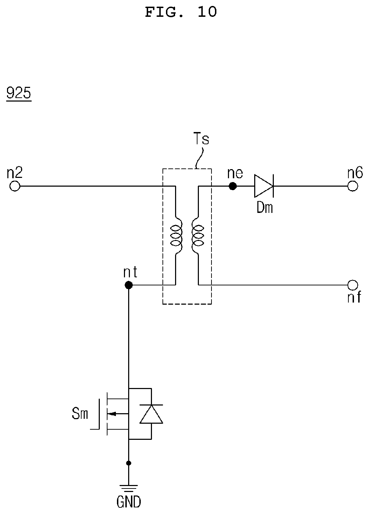

FIG. 10 is an exemplary circuit diagram of the converter in FIG. 7.

Referring to FIG. 10, the second converter 925 can include a flyback converter.

That is, the converter 925 can include a transformer Ts, a switching element sm connected to a node nt at the input side of the transformer Ts, and a diode Dm connected to a node n6 at the output side of the transformer Ts.

Accordingly, an input AC voltage Va from the node n2 can be converted into a DC voltage based on a switching operation of the switching element sm, and output through both ends of an n6-n7 node.

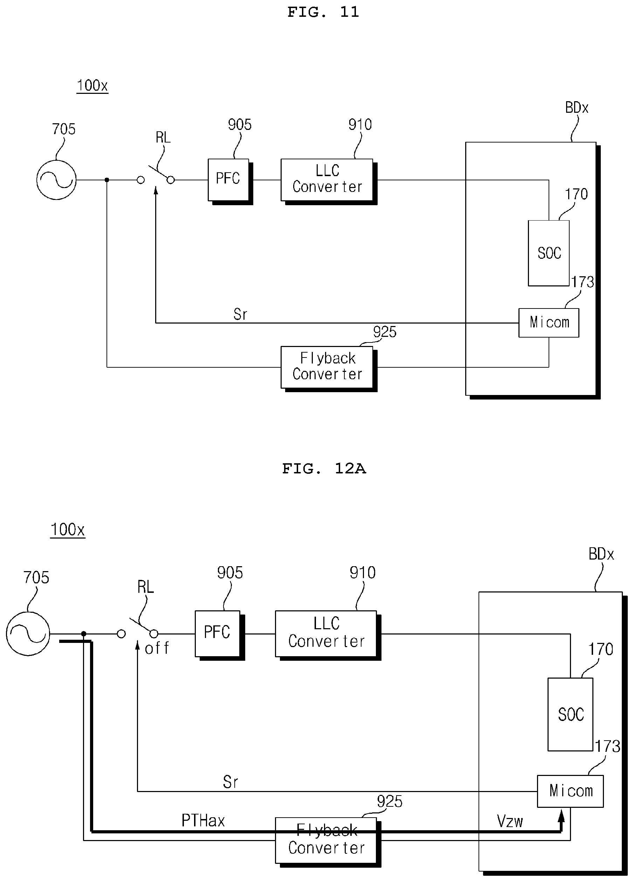

FIG. 11 is an exemplary internal block diagram of an image display apparatus associated with the present disclosure.

Referring to the drawing, an image display apparatus 100x associated with the present disclosure includes: a signal processing device 170 configured to output an image signal to a display 180; a relay RL configured to switch an input AC voltage Va; a converter 925 connected to an input terminal of the relay RL and configured to convert the input AC voltage Va into a DC voltage; a microcomputer (controller) 173 configured to operate based on the DC voltage from the converter 925; a second converter 905 connected to an output terminal of the relay RL and configured to convert the input AC voltage Va into the DC voltage; and a third converter 910 configured to convert a level of the DC voltage from the second converter 905.

FIGS. 12A to 12E are diagrams referred to in the description of FIG. 11.

FIG. 12A is a diagram explaining operation of the image display apparatus 100x associated with the present disclosure, in a first standby mode which is a low-power standby mode.

Referring to FIG. 12A, in the first standby mode when the relay RL is turned off and the converter 925 operates, a first level voltage Vzw of approximately 3.3 V can be supplied to the microcontroller 173 based on a current path PTHax.

Meanwhile, if the converter 925 is a flyback converter, an input side and an output side of the transformer Ts are insulated, such that power consumed by the converter 925 is almost zero.

Accordingly, the first standby mode can be referred to as a zero watt standby mode.

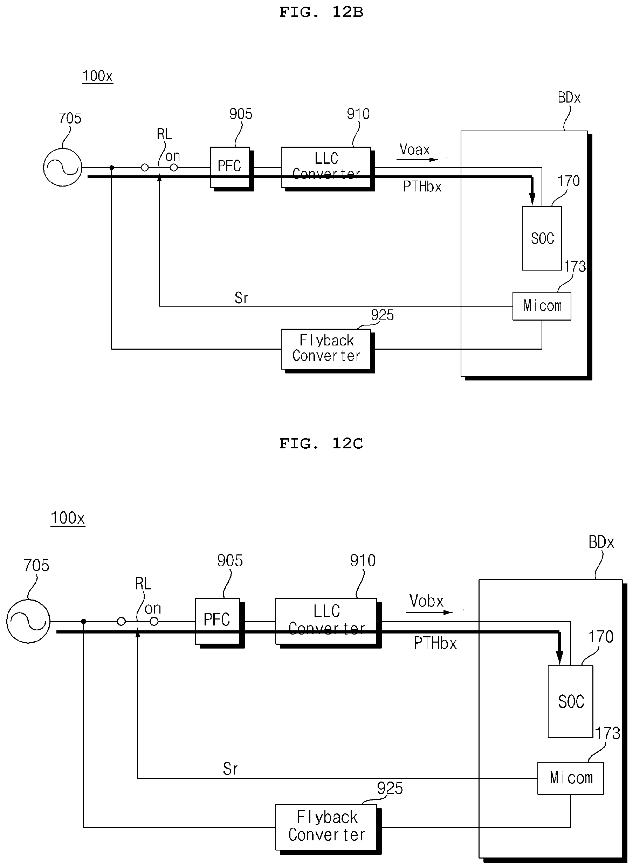

FIG. 12B is a diagram explaining operation of the image display apparatus 100x associated with the present disclosure, in a second standby mode which is a normal standby mode.

Referring to FIG. 12B, in the second standby mode when the relay RL is turned on and the second converter 905 and the third converter 910 operate, a second level voltage Voax of approximately 8 V can be supplied to the signal processing device 170 based on a current path PTHbx.

For the second standby mode, the third converter 910 can output the second level voltage Voax of approximately 8 V, as a voltage in the standby mode, to the signal processing device 170.

Meanwhile, in the second standby mode, the voltage is supplied through the relay RL, the second converter 905, and the third converter 910 based on the current path PTHbx, such that power consumption is higher in the second standby mode than in the first standby mode.

Particularly, due to power consumption during conduction of the relay RL, a problem occurs in that power consumption in the standby mode exceeds an allowable reference level.

FIG. 12C is a diagram explaining operation of the image display apparatus 100x associated with the present disclosure, in an operating mode.

Referring to FIG. 12C, in the operating mode when the relay RL is turned on and the second converter 905 and the third converter 910 operate, a third level voltage Vobx of approximately 12 V can be supplied to the signal processing device 170 based on a current path PTHcx.

Meanwhile, for the operating mode, the third converter 910 can output the third level voltage Vobx of approximately 12 V to the signal processing device 170, unlike FIG. 12B.

Meanwhile, in the operating mode, the voltage is supplied through the relay RL, the second converter 905, and the third converter 910 based on the current path PTHcx, such that power consumption is higher in the operating mode than in the first standby mode.

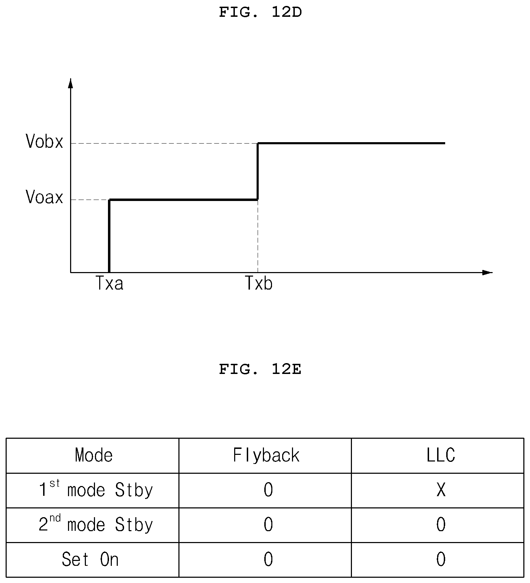

FIG. 12D is a diagram referred to in the description of operation of the third converter 910 in FIG. 11.

Referring to FIG. 12D, the third converter 910 does not operate in the first standby mode, and is configured to output a second level voltage Voax of approximately 8 V during a period from Txa to Txb which is a second standby mode period, and output a third level voltage Vobx of approximately 12 V during a period after Txb which is an operating mode period.

FIG. 12E is a diagram explaining operations of the converter 920 and the third converter 910 in the first standby mode, the second standby mode, and the operating mode.

Referring to FIG. 12E, in the first standby mode, the relay RL is turned off, the converter 920 operates, the second converter 905 is turned off, and the third converter 910 is turned off.

Meanwhile, in the second standby mode and the operating mode, the relay RL is turned on, the converter 920 operates, the second converter 905 operates, and the third converter 910 operates.

Meanwhile, in the second standby mode and the operating mode, the third converter 910 outputs voltages of different levels.

Referring to FIGS. 11 to 12E, the image display apparatus 100x associated with the present disclosure has a problem in that power consumption in the first standby mode is less than or equal to an allowable reference level in the standby mode, but power consumption in the second standby mode exceeds the allowable reference level in the standby mode.

Accordingly, the present disclosure proposes a method of reducing power consumption so that the power consumption in the second standby mode as well as in the first standby mode can be less than or equal to the allowable reference level in the standby mode, which will be described below with reference to FIG. 13 and subsequent figures.

FIG. 13 is an exemplary internal block diagram of an image display apparatus according to an embodiment of the present disclosure.

Referring to the drawing, an image display apparatus 100 according to an embodiment of the present disclosure includes: a display 180; a signal processing device 170 configured to output an image signal to the display 180; a relay RL configured to switch an input AC voltage Va; a converter 925 connected in parallel to a first end n2 of the relay RL; a microcontroller 173 configured to operate based on a DC voltage from the converter 925; and a switch ST disposed between the converter 925 and the signal processing device 170 and configured to operate based on a control signal output from the microcontroller 173.

It is illustrated in the drawing that the converter 925 is disposed between an input terminal of the relay RL and a node n6.

Meanwhile, it is illustrated in the drawing that the switch ST is disposed between the node n6, which is an output terminal of the converter 925, and a node ns which is one of the input terminals of the signal processing device 170.

Meanwhile, in the first standby mode, the image display apparatus 100 according to an embodiment of the present disclosure is configured to supply a voltage Vzw of a first level to the microcontroller 173 based on an off state of the relay RL, an off state of the switch ST, and the operation of the converter 925, and in the second standby mode, the image display apparatus 100 is configured to supply a voltage Vst of a second level, greater than the first level, to the signal processing device 170 based on an off state of the relay RL, the operation of the switch ST, and the operation of the converter 925. Accordingly, it is possible to reduce power consumption in the standby mode. Particularly, in a plurality of standby modes, power consumption in each standby mode can be reduced.

Meanwhile, the microcontroller 173 can be configured to output a control signal Sr for the operation of the relay RL based on a DC voltage from the converter 925.

Meanwhile, the image display apparatus 100 according to an embodiment of the present disclosure can further include: a second converter 905 connected to a second end n4 of the relay RL and configured to convert the input AC voltage Va from the relay RL into a DC voltage; and a third converter 910 configured to convert a level of the DC voltage from the second converter 905.

Meanwhile, the converter 925 can be configured to output the voltage Vzw of the first level in the first standby mode, and output the voltage Vst of the second level greater than the first level in the second standby mode. Accordingly, power consumption in the first standby mode and the second standby mode can be reduced.

FIGS. 14A to 16D are diagrams referred to in the description of FIG. 13.

FIG. 14A is a diagram explaining operation of the image display apparatus 100 according to an embodiment of the present disclosure in a first standby mode which is a low-power standby mode.

Referring to FIG. 14A, in the first standby mode when the relay RL is turned off, the switch ST is turned off, and the converter 925 operates, a first level voltage Vzw of approximately 3.3 V can be supplied to the microcontroller 173 based on a current path PTHa.

That is, the first level voltage Vzw of approximately 3.3 V can be supplied to the microcontroller 173 based on the current path PTHa that passes through the converter 925.

To this end, the converter 925 can output the first level voltage Vzw of approximately 3.3 V in the first standby mode.

Meanwhile, if the converter 925 is a flyback converter, an input side and an output side of the transformer Ts are insulated, such that power consumed by the converter 925 is almost zero.

Accordingly, the first standby mode can be referred to as a zero watt standby mode.

Meanwhile, in the first standby mode, the voltage Vst of the second level is not supplied to the signal processing device 170. Accordingly, power consumption in the first standby mode can be reduced.

Meanwhile, the power consumption in the first standby mode can be less than the power consumption in the second standby mode.

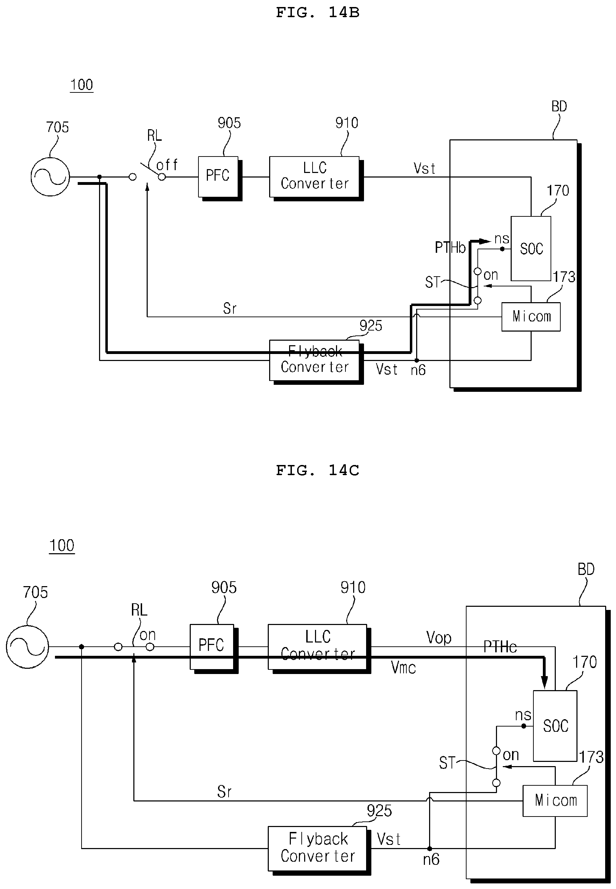

FIG. 14B is a diagram explaining operation of the image display apparatus 100 in a second standby mode which is a normal standby mode, according to an embodiment of the present disclosure.

Referring to FIG. 14B, in the second standby mode when the relay RL is turned off, the switch ST is turned on, and the converter 925 operates, the second level voltage Vst of approximately 8 V can be supplied to the signal processing device 170 based on a current path PTHb.

That is, in the second standby mode, the second level voltage Vst of approximately 8 V can be supplied to the signal processing device 170 based on the current path PTHb that passes through the converter 925 and the switch ST.

To this end, the converter 925 can output the second level voltage Vst of approximately 8 V in the second standby mode.

Meanwhile, unlike FIG. 12B, the relay RL is turned off in the second standby mode, thereby significantly reducing power consumption.

Particularly, as the current path passes through only the converter 925 and the switch ST, the power consumption in the second standby mode is greater than that in the first standby mode, but can be stably maintained at or below an allowable reference level in the standby mode.

FIG. 14C is a diagram explaining operation of the image display apparatus 100 in an operating mode.

Referring to the drawing, in the operating mode when the relay RL is turned on and the second converter 905 and the third converter 910 operate, a third level voltage Vop of approximately 12 V can be supplied to the signal processing apparatus 170 based on the current path PTHc.

Meanwhile, in the operating mode after the first standby mode or the second standby mode, the third converter 910 can be configured to supply the voltage Vop of the third level, greater than the second level, to the signal processing device 170 based on an on state of the relay RL, the operation of the second converter 905, and the operation of the third converter 910. Accordingly, the operating voltage Vop can be stably supplied to the signal processing device 170 through the third converter 910.

Meanwhile, in the operating mode, the current path PTHc passes through the relay RL, the second converter 905, and the third converter 910, such that power consumption is higher in the operating mode than in the first standby mode and the second standby mode.

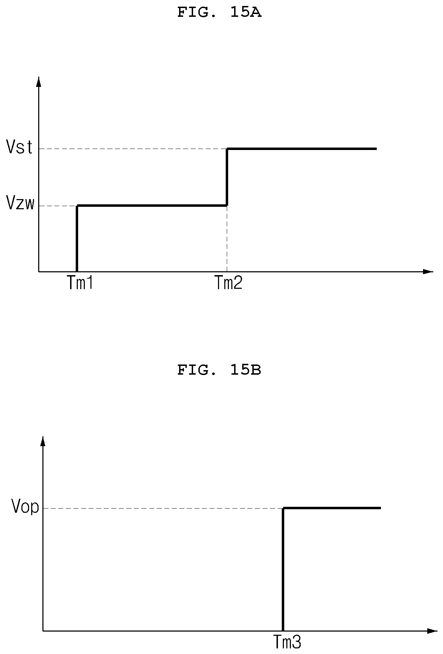

FIG. 15A is a diagram referred to in the description of operation of the converter 925 in FIG. 12.

Referring to FIG. 15A, a first level voltage Vzw of approximately 3.3 V can be output during a period from Tm1 to Tm2 which is the first standby mode period, and a second level voltage Vst of approximately 8 V can be output during a period after Tm2 which is the second standby mode period.

FIG. 15B is a diagram explaining operation of the third converter 910 in an operating mode.

Referring to FIG. 15B, the third converter 910 does not operate in the first standby mode period and the second standby mode period.

Meanwhile, the third converter 910 can be configured to output a third level voltage Vop of approximately 12V during a period after Tm3 which is the operating mode period after the first standby mode or the second standby mode.

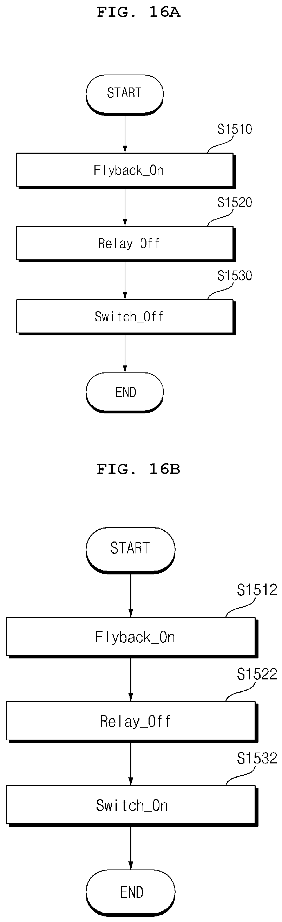

FIG. 16A is a flowchart illustrating a method of operating an image display apparatus in the first standby mode.

Referring to FIG. 16A, in the first standby mode, the converter 925 in the image display apparatus 100 is turned on (S1510), the relay RL is turned off (S1520), and the switch ST is turned off (S1530).

In the first standby mode, the converter 925 can be configured to output a first level voltage Vzw of approximately 3.3 V, such that the first level voltage Vzw of approximately 3.3 V can be supplied to the microcontroller 173.

FIG. 16B is a flowchart illustrating a method of operating an image display apparatus in the second standby mode.

Referring to FIG. 16B, in the second standby mode, the converter 925 in the image display apparatus 100 is turned on (S1512), the relay RL is turned off (S1522), and the switch ST is turned on (S1532).

In the second standby mode, the converter 925 can be configured to output a second level voltage Vst of approximately 8 V, such that the second level voltage Vst of approximately 8 V can be supplied to the signal processing device 170.

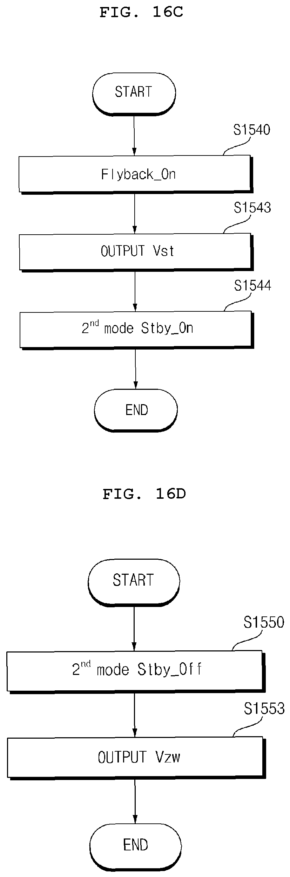

FIG. 16C is a flowchart illustrating a method of operating an image display apparatus in response to the first standby mode being switched to the second standby mode.

Referring to FIG. 16C, in the first standby mode, the converter 925 in the image display apparatus 100 is turned on (S1540), and the converter 925 outputs a first level voltage Vzw of approximately 3.3 V.

When the first standby mode is switched to the second standby mode, the converter 925 in the image display apparatus 100 outputs a second level voltage Vst of approximately 8 V (S1543) and enters the second standby mode (S1544).

As a result, in response to the first standby mode being switched to the second standby mode, the switch ST is turned on, such that the voltage Vst of the second level greater than the first level can be supplied to the signal processing device 170. Accordingly, it is possible to reduce power consumption in the standby mode.

FIG. 16D is a flowchart illustrating a method of operating an image display apparatus in response to the second standby mode being switched to the first standby mode.

Referring to FIG. 16D, in order to switch from the second standby mode to the first standby mode, the second standby mode is turned off (S1550).

Then, in response to the second standby mode being switched to the first standby mode, the converter 925 in the image display apparatus 100 outputs a first level voltage Vzw of approximately 3.3 V (S1553) and enters the first standby mode.

Meanwhile, in response to the second standby mode being switched to the first standby mode, the switch ST is turned off, such that the voltage Vzw of the first level can be supplied to the signal processing device 170. Accordingly, it is possible to reduce power consumption in the standby mode.

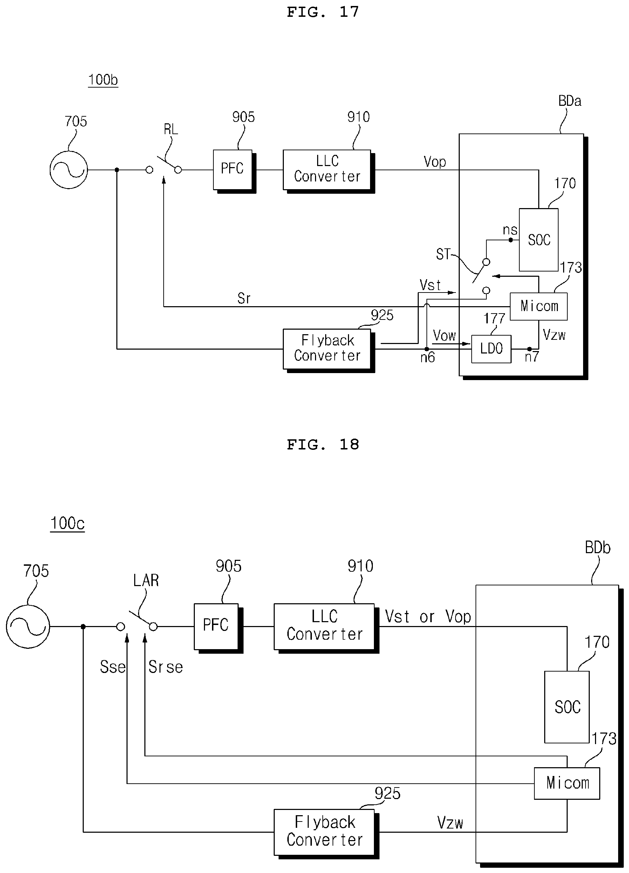

FIG. 17 is an exemplary internal block diagram of an image display apparatus according to another embodiment of the present disclosure.

Referring to FIG. 17, compared to the image display apparatus 100 of FIG. 14, an image display apparatus 100b of FIG. 17 can further include a voltage dropper 177 configured to drop a level of a DC voltage from the converter 925 and output the voltage Vzw of the first level.

That is, in the first standby mode, the image display apparatus 100b in FIG. 17 can be configured to supply the voltage Vzw of the first level to the microcontroller 173 based on an off state of the relay RL, an off state of the switch ST, the operation of the converter 925, and the operation of the voltage dropper 177, and in the second standby mode, the image display apparatus 100b is configured to supply a voltage Vst of a second level greater than the first level to the signal processing device 170 based on an off state of the relay RL, the operation of the switch ST, and the operation of the converter 925. Accordingly, it is possible to reduce power consumption in the standby mode.

That is, the image display apparatus 100b according to another embodiment of the present disclosure includes: a display 180; a signal processing device 170 configured to output an image signal to the display 180; a relay RL configured to switch an input AC voltage Va; a converter 925 connected in parallel to a first end n2 of the relay RL; a voltage dropper 177 configured to drop a level of a DC voltage from the converter 925; a microcontroller 173 configured to operate based on the DC voltage from the converter 925; and a switch ST disposed between the converter 925 and the signal processing device 170 and configured to operate based on a control signal output from the microcontroller 173.

Meanwhile, in the first standby mode, the image display apparatus 100 according to another embodiment of the present disclosure is configured to supply a voltage Vzw of a first level to the microcontroller 173 based on an off state the relay RL, an off state of the switch ST, the operation of the converter 925, and the operation of the voltage dropper 177.

Meanwhile, in the second standby mode, the image display apparatus 100 according to another embodiment of the present disclosure is configured to supply a voltage Vst of a second level greater than the first level, to the signal processing device 170 based on an off state of the relay RL, the operation of the switch ST, and the operation of the converter 925. Accordingly, it is possible to reduce power consumption in the standby mode. Particularly, in a plurality of standby modes, power consumption in each standby mode can be reduced.

Meanwhile, in the first standby mode, the converter 925 can be configured to output a voltage Vow of a fourth level greater than the first level which is approximately 3.3 V. In this case, the fourth level can be approximately 4 V.

Meanwhile, in the second standby mode, the converter 925 can be configured to output a second level voltage Vst of approximately 8 V which is greater than the fourth level. Accordingly, it is possible to reduce power consumption in the standby mode.

Meanwhile, the converter 925 can be configured to output the voltage Vow of the fourth level greater than the first level in the first standby mode, and the voltage dropper 177 can be configured to drop the fourth level voltage Vow to the first level of approximately 3.3 V in the first standby mode.

Meanwhile, in the second standby mode, the voltage dropper 177 can be configured to drop the second level voltage of approximately 8 V to the first level of approximately 3.3 V. Accordingly, it is possible to reduce power consumption in the standby mode.

Meanwhile, the image display apparatus 100 according to another embodiment of the present disclosure can further include: a second converter 905 connected to a second end n4 of the relay RL and configured to convert the input AC voltage Va from the relay RL into a DC voltage; and a third converter 910 configured to convert a level of the DC voltage from the second converter 905. Accordingly, an operating voltage Vop can be stably supplied to the signal processing device 170 through the third converter 910.

Meanwhile, in the operating mode after the first standby mode or the second standby mode, the third converter 910 can be configured to supply a voltage Vop of a third level, greater than the second level, based on an on state of the relay RK, the operation of the second converter 905, and the operation of the third converter 910. Accordingly, the operating voltage Vop can be stably supplied to the signal processing device 170 through the third converter 910.

FIG. 18 is an exemplary internal block diagram of an image display apparatus according to yet another embodiment of the present disclosure.

Referring to FIG. 18, an image display apparatus 100c according to yet another embodiment of the present disclosure is similar to the image display apparatus 100 in FIG. 14, but is different in that a latching relay LAR is disposed instead of the relay RL, and the switch ST is omitted.

In the image display apparatus 100c according to yet another embodiment of the present disclosure, a voltage Vzw of a first level can be supplied to the microcontroller 173 in a first standby mode based on an off state of the latching relay LAR and the operation of the converter 925, and a voltage Vst of a second level greater than the first level can be supplied to the signal processing device 170 in a second standby mode based on an on state of the latching relay LAR, the operation of the second converter 905, and the operation of the third converter 910.

Meanwhile, power consumption of the latching relay LAR is less than that of the relay RL of FIG. 14, such that the power consumption in the second standby mode as well in the first standby mode can be maintained at or below an allowable reference level in the standby mode.

Further, in the image display apparatus 100c according to yet another embodiment of the present disclosure, the converter 925 can be configured to output the first level voltage Vzw in the first standby mode, and the third converter 910 can be configured to output the second level voltage Vst in the second standby mode.

Meanwhile, in the image display apparatus 100c according to yet another embodiment of the present disclosure, a third level voltage Vop output from the third converter 910 can be supplied to the signal processing device 170 based on an on state of the latching relay LAR, the operation of the second converter 905, and the operation of the third converter 910.

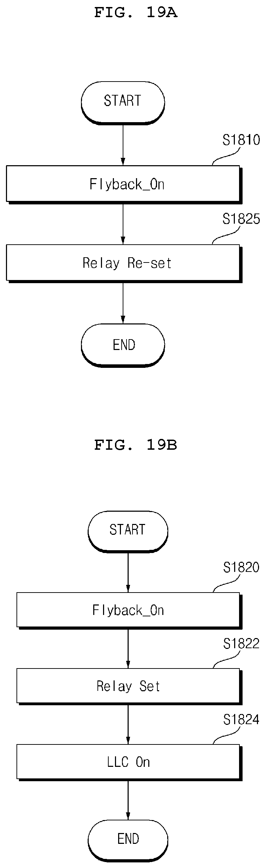

FIG. 19A is a flowchart illustrating a method of operating the image display apparatus 100c of FIG. 18 in the first standby mode.

Referring to FIG. 19A, in the first standby mode, the converter 925 in the image display apparatus 100c is turned on (S1810), and the latching relay LAR is turned off based on a reset signal (S1825).

Meanwhile, in the first standby mode, the converter 925 can be configured to output the first level voltage Vzw of approximately 3.3 V, such that the first level voltage Vzw of approximately 3.3 V can be supplied to the microcontroller 173.

FIG. 19B is a flowchart illustrating a method of operating the image display apparatus 100c of FIG. 18 in the second standby mode.

Referring to FIG. 19B, in the second standby mode, the converter 925 in the image display apparatus 100c is turned on (S1820), the latching relay LAR is turned on based on a set signal (S1822), and the second converter 905 and the third converter 910 operate (S1824).

In the second standby mode, the third converter 910 can be configured to output the second level voltage Vst of approximately 8 V, such that the second level voltage Vst of approximately 8 V can be supplied to the signal processing device 170.

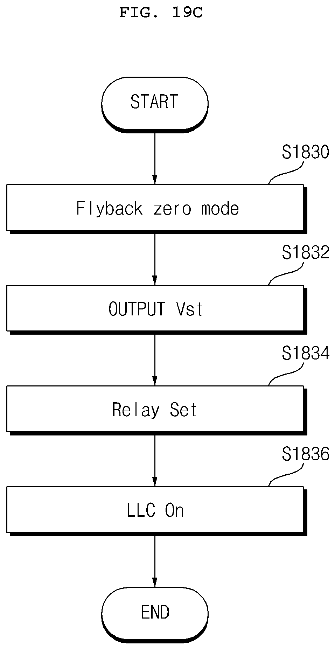

FIG. 19C is a flowchart illustrating a method of operating the image display apparatus 100c of FIG. 18 in response to the first standby mode being switched to the second standby mode.

Referring to FIG. 19C, the converter 925 in the image display apparatus 100c is turned on in the first standby mode (S1830), and the converter 925 outputs the first level voltage Vzw of approximately 3.3 V in the first standby mode.

When the first standby mode is switched to the second standby mode, the converter 925 in the image display apparatus 100c outputs the second level voltage Vst of approximately 8 V (S1832) and enters the second standby mode.

As a result, in response to the first standby mode being switched to the second standby mode, the latching relay LAR is turned on based on the set signal (S1834), and the second converter 905 and the third converter 910 operate (S1836).

Accordingly, the voltage Vst of the second level greater than the first level can be supplied to the signal processing device 170, thereby reducing power consumption in the standby mode.

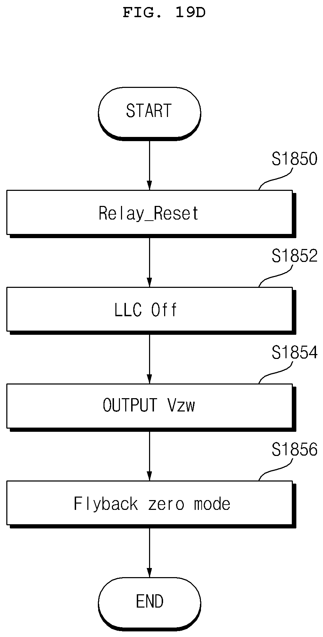

FIG. 19D is a flowchart illustrating a method of operating the image display apparatus 100c of FIG. 18 in response to the second standby mode being switched to the first standby mode.

Referring to FIG. 19D, in order to switch from the second standby mode to the first standby mode, the latching relay LAR is turned off based on a reset signal of the latching relay LAR (S1850), such that the second converter 905 and the third converter 910 are turned off (S1852).

Then, in response to the second standby mode being switched to the first standby mode, the converter 925 in the image display apparatus 100c outputs the first level voltage Vzw of approximately 3.3 V (S1854) and enters the first standby mode (S1856).

Meanwhile, in response to the second standby mode being switched to the first standby mode, the first level voltage Vzw can be supplied to the signal processing device 170, thereby reducing power consumption in the standby mode.

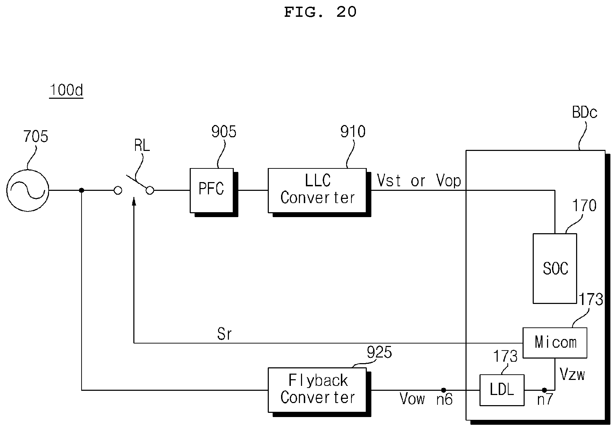

FIG. 20 is an exemplary internal block diagram of an image display apparatus according to yet another embodiment of the present disclosure.

Referring to FIG. 20, compared to the image display apparatus 100c of FIG. 18, an image display apparatus 100d of FIG. 20 can further include a voltage dropper 177 configured to drop a level of a DC voltage from the converter 925 and output a voltage Vzw of a first level.

Meanwhile, in the first standby mode, the converter 925 can be configured to output a voltage Vow of a fourth level greater than the first level which is approximately 3.3 V. In this case, the fourth level can be approximately 4 V.

Meanwhile, in the first standby mode, the converter 925 can be configured to output the voltage Vow of the fourth level greater than the first level, and the voltage dropper 177 can be configured to drop the fourth level voltage Vow to the first level of approximately 3.3 V in the first standby mode.

It will be apparent that, although the preferred embodiments have been illustrated and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. An image display apparatus comprising:
a display;
a signal processing device configured to output an image signal to the display;
a relay configured to switch an input AC voltage;
a converter connected in parallel to a first end of the relay;
a controller configured to operate based on a DC voltage from the converter; and
a switch disposed between the converter and the signal processing device, and configured to operate based on a control signal output from the controller,
wherein in a first standby mode, a voltage of a first level is supplied to the controller based on an off state of the relay, an off state of the switch, and operation of the converter, and in a second standby mode, a voltage of a second level greater than the first level is supplied to the signal processing device based on an off state of the relay, operation of the switch, and operation of the converter.

2. The image display apparatus of claim 1, wherein the converter is configured to output the voltage of the first level in the first standby mode and output the voltage of the second level, greater than the first level, in the second standby mode.

3. The image display apparatus of claim 1, wherein power consumption in the first standby mode is less than power consumption in the second standby mode.

4. The image display apparatus of claim 1, further comprising:
a second converter connected to a second end of the relay and configured to convert the input AC voltage from the relay into a DC voltage; and
a third converter configured to convert a level of the DC voltage from the second converter.

5. The image display apparatus of claim 4, wherein in an operating mode after the first standby mode or the second standby mode, the third converter is configured to supply a voltage of a third level, greater than the second level, to the signal processing device based on an on state of the relay, operation of the second converter, and operation of the third converter.

6. The image display apparatus of claim 1, wherein in response to the first standby mode being switched to the second standby mode, the switch is turned on, and the voltage of the second level greater than the first level is supplied to the signal processing device.

7. The image display apparatus of claim 1, wherein in response to the second standby mode being switched to the first standby mode, the switch is turned off, and the voltage of the first level is supplied to the signal processing device.

8. The image display apparatus of claim 1, further comprising a voltage dropper configured to drop a level of a DC voltage from the converter and output the voltage of the first level,
wherein in the first standby mode, the voltage of the first level is supplied to the controller based on an off state of the relay, an off state of the switch, operation of the converter, and operation of the voltage dropper, and in the second standby mode, the voltage of the second level greater than the first level is supplied to the signal processing device based on an off state of the relay, operation of the switch, and operation of the converter.

9. The image display apparatus of claim 8, wherein the converter is configured to output a voltage of a fourth level greater than the first level in the first standby mode, and output the voltage of the second level greater than the fourth level in the second standby mode.

10. The image display apparatus of claim 8, wherein the converter is configured to output a voltage of a fourth level greater than the first level in the first standby mode, and the voltage dropper is configured to drop the voltage of the fourth level to the first level in the first standby mode.

11. The image display apparatus of claim 9, wherein the voltage dropper is configured to drop the voltage of the second level to the first level in the second standby mode.

12. The image display apparatus of claim 1, wherein the converter comprises a flyback converter.

13. An image display apparatus comprising:
a display;
a signal processing device configured to output an image signal to the display;
a relay configured to switch an input AC voltage;
a converter connected in parallel to a first end of the relay;
a voltage dropper configured to drop a level of a DC voltage from the converter;
a controller configured to operate based on a DC voltage from the converter; and
a switch disposed between the converter and the signal processing device, and configured to operate based on a control signal output from the controller,
wherein in a first standby mode, a voltage of a first level is supplied to the controller based on an off state of the relay, an off state of the switch, operation of the converter, and operation of the voltage dropper, and in a second standby mode, a voltage of a second level greater than the first level is supplied to the signal processing device based on an off state of the relay, operation of the switch, and operation of the converter.

14. The image display apparatus of claim 13, further comprising:
a second converter connected to a second end of the relay and configured to convert the input AC voltage from the relay into a DC voltage; and
a third converter configured to convert a level of the DC voltage from the second converter.

15. The image display apparatus of claim 14, wherein in an operating mode after the first standby mode or the second standby mode, the third converter is configured to supply a voltage of a third level, greater than the second level, to the signal processing device based on an on state of the relay, operation of the second converter, and operation of the third converter.
